**Europäisches Patentamt**

**European Patent Office**

**Office européen des brevets**

(11) Veröffentlichungsnummer: **0 040 308**

**A1**

## (12) EUROPÄISCHE PATENTANMELDUNG

(21) Anmeldenummer: **81102368.8**

(22) Anmeldetag: **28.03.81**

(51) Int. Cl.³: **G 02 F 1/133**
   **G 09 F 9/30**

(30) Priorität: **19.05.80 DE 3019038**

(43) Veröffentlichungstag der Anmeldung:
   **25.11.81 Patentblatt 81/47**

(84) Benannte Vertragsstaaten:
   **CH FR GB IT LI SE**

(71) Anmelder: **VDO Adolf Schindling AG**
   **Gräfstrasse 103**
   **D-6000 Frankfurt/Main(DE)**

(72) Erfinder: **Preiss, Bernd**
   **Fichtestrasse 33**
   **D-6238 Hofheim(DE)**

(74) Vertreter: **Könekamp, Herbert, Dipl.-Ing.**
   **Sodener Strasse 9**
   **D-6231 Schwalbach(DE)**

(54) **Flüssigkristallanzeige.**

(57) Bei einer Flüssigkristallanzeige zur Darstellung von Zeichen und Symbolen, mit permanent sichtbaren Konturen, wie zum Beispiel einer Skala, Zeichen oder Umrandungen, ist auf einer Glasplatte (1, 2) bzw. einer Orientierungsschicht (10, 11) des Flüssigkristallelements entsprechend den Konturen eine Konturschicht (12, 13) mit einer solchen Dicke aufgebracht, daß in dem mit Flüssigkristallsubstanz gefüllten Bereich zwischen der Konturschicht (13) und der zweiten Glasplatte (1, 2) bzw. Orientierungsschicht (10, 11) keine Helix aufbaubar ist.

EP 0 040 308 A1

VDO Adolf Schindling AG   - 1 -   6000 Frankfurt/Main
Gräfstraße 103
1515 Kl-kl

Flüssigkristallanzeige

Die Erfindung bezieht sich auf eine Flüssigkristallanzeige zur Darstellung von Zeichen und Symbolen,
mit permanent sichtbaren Konturen, wie zum Beispiel
einer Skala, Zeichen oder Umrandungen, mit einer
zwischen zwei im Abstand zueinander angeordneten
Glasplatten gebildeten Kammer, die am Randbereich
der Glasplatten nach außen hin verschlossen ist,
mit auf den Außenflächen der Glasplatten an-geordneten Polarisatoren und mit kammerseitig auf den Glasplatten angeordneten Elektroden, sowie auf den Elektroden angeordneten Orientierungsschichten, wobei
die Kammer mit einer Flüssigkristallsubstanz gefüllt
ist und der Abstand zwischen den Orientierungsschichten so groß ist, daß sich eine Helix in der Flüssigkristallsubstanz zwischen den Orientierungsschichten
aufbauen kann.

Bei derartigen Flüssigkristallanzeigen ist es bekannt,
auf die Außenfläche einer Glasplatte, meist der hinteren, die Konturen aufzudrucken.

- 2 -

Stellen diese Konturen eine Skala eines Meßinstruments dar, so ist ein korrektes Ablesen der Anzeige nur möglich, wenn der Betrachter genau senkrecht auf die Anzeige schaut. Schaut der Betrachter von der Seite her auf die Anzeige, so sieht er aufgrund des durch die Glasplatte bedingten relativ großen Abstands zwischen der Ebene der Flüssigkristallschicht, in der die Darstellung der Anzeigewerte erfolgt und der Ebene, in der die Skala sich befindet, einen verkehrten Skalenwert hinter seinem dargestellten Anzeigewert.

Es ist daher Aufgabe der Erfindung eine Flüssigkristallanzeige nach dem Oberbegriff zu schaffen, bei der ein einwandfrei richtiges Ablesen der Anzeige gewährleistet ist.

Diese Aufgabe wird erfindungsgemäß dadurch gelöst, daß auf einer Glasplatte bzw. einer Orientierungsschicht entsprechend den Konturen eine Konturschicht mit einer solchen Dicke aufgebracht ist, daß in dem mit Flüssigkristallsubstanz gefüllten Bereich zwischen der Konturschicht und der zweiten Glasplatte bzw. Orientierungsschicht keine Helix aufbaubar ist. Dadurch wird bewirkt, daß bei parallel gerichteten Polarisatoren die mit der Konturschicht bedeckten Bereiche hell erscheinen, während die nicht bedeckten Bereiche dunkel erscheinen. In diesem Fall sind die angezeigten Zeichen und Symbole hell.

Bei rechtwinklig zueinander gerichteten Polarisatoren ist es genau umgekehrt, so daß die mit der Konturschicht bedeckten Bereiche sowie die angezeigten Zei-

- 3 -

chen und Symbole dunkel und die nicht bedeckten Bereiche hell erscheinen.

Die Ränder der permanent sichtbaren Konturen sind scharf abgegrenzt, was eine einwandfreie Ablesbarkeit der Anzeige noch erhöht.

Da die Darstellung der Zeichen und Symbole und der Konturen in der gleichen Ebene erfolgen, ist keine fehlerhafte Zuordnung der Zeichen und Symbole zu den Konturen beim Ablesen möglich.

Die Konturschicht kann auf verschiedene Art und Weise aufgebracht werden. Eine Möglichkeit ist es die Konturschicht durch einen Druckvorgang aufzubringen. Die Konturschicht kann aber auch eine aufklebbare Folie sein. Diese würde vorteilhafterweise so hergestellt, daß eine die Glasplatte bzw. die Orientierungsschicht völlig abdeckende Folie aufgeklebt und anschließend die Bereiche der Folie, an denen keine Kontur hervorstehen soll, weggeätzt werden.

Die Konturschicht kann auch durch eine auf die Glasplatte aufgebrachte Glaslotschicht gebildet sein. Da auch der Verschluß der Kammer am Rand der Glasplatten aus Glaslot hergestellt sein kann, können Konturschicht und Verschluß in einem Arbeitsgang aufgetragen werden. Diese Möglichkeit ist auch dann gegeben, wenn die Konturschicht aus einem Klebstoff besteht, der sowohl für die Konturschicht als auch für den Verschluß am Rand der Glasplatten verwandt werden kann. Dieses Herstellen von Konturschicht und Verschluß aus dem gleichen Werkstoff und im gleichen

- 4 -

Arbeitsgang ermöglicht eine äußerst wirtschaftliche Herstellung der Flüssigkristallanzeige.

Sind die Polarisatoren parallel zueinander ausgerichtet, so ist es vorteilhaft, wenn die Konturschicht aus einem transparenten Werkstoff besteht, der zur farbigen Darstellung der Konturen auch aus einem farbigen Werkstoff bestehen kann. Zur farbigen Darstellung der Konturen kann aber auch eine der den Glasplatten zugewandten Stirnseiten der Konturschicht eine Farbschicht tragen, die z.B. aufgedruckt sein kann. Eine andere Möglichkeit besteht darin, daß die Farbschicht eine Farbfolie ist.

Entspricht die Dicke der Konturschicht dem Abstand der beiden Glasplatten zueinander, so hat dies den Vorteil, daß die Konturschicht gleichzeitig als Abstandshalter für die Glasplatte dient. Es sind daher keine besonderen Abstandshalter, wie z.B. der Flüssigkristallsubstanz beigemischte Glasfasern erforderlich.

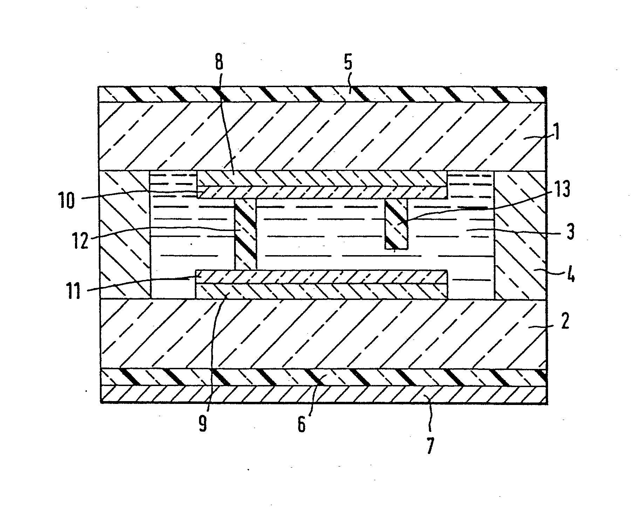

Ein Ausführungsbeispiel der Erfindung ist in der einzigen Figur der Zeichnung dargestellt und wird im folgenden näher beschrieben.

Die Figur zeigt eine im Schnitt dargestellte Flüssigkristallanzeige, die aus zwei im Abstand voneinander angeordneten Glasplatten 1 und 2, zwischen denen eine mit einer Flüssigkristallsubstanz gefüllte Kammer 3 gebildet ist. Am Randbereich der Glasplatten 1 und 2 ist die Kammer 3 durch einen Verschluß 4 nach außen verschlossen.

Auf den Außenflächen der Glasplatten 1 und 2 sind Polarisatoren 5 und 6 angeordnet, wobei der Polarisator 6 noch einen Reflektor 7 trägt. Kammerseitig sind auf den Glasplatten 1 und 2 transparente Elektroden 8 und 9 angeordnet, die wiederum ebenfalls transparente Orientierungsschichten 10 und 11 tragen. Der Abstand der Orientierungsschichten voneinander ist so groß, daß sich eine Helix in der Flüssigkristallsubstanz aufbauen kann.

Bei der zwischen den Orientierungsschichten angeordneten Konturschicht 12, die durchgehend von der einen zur anderen Orientierungsschicht 10 und 11 reicht, kann schon allein *deshalb* keine Helix sich aufbauen, weil dort keine Flüssigkristallsubstanz vorhanden ist.

Aber auch bei der auf der Orientierungsschicht 10 angeordneten Konturschicht 13, zwischen der und der Orientierungsschicht 11 ein mit Flüssigkristallsubstanz gefüllter Bereich ist, kann sich keine Helix aufbauen, da dazu der Abstand zwischen der Konturschicht 13 und der Orientierungsschicht 11 zu gering ist.

Sind die Polarisatoren 5 und 6 rechtwinklig zueinander ausgerichtet, so kann kein Licht von der Seite der Glasplatte 2 her durch die Orientierungsschicht 11, die Konturschichten 12 und 13 und die Orientierungsschicht 10 zur Glasplatte 1 gelangen. Der von den Konturschichten 12 und 13 abgedeckte Bereich erscheint dem Betrachter auf der Seite der Glasplatte 1 daher dunkel.

Dadurch, daß in dem nicht von den Konturschichten 12 und 13 bedeckten Bereich sich in der Flüssigkristallsubstanz eine Helix aufbaut, kann dort das an der Glasplatte 2 in die Kammer 3 eintretende Licht durch die Orientierungsschicht 11 die Flüssigkristallsubstanz und die Orientierungsschicht 10 zur Glasplatte 1 gelangen. Dieser Bereich ist für den Betrachter daher hell. Wird in diesem hellen Bereich an den Elektroden 8 und 9 ein elektrisches Feld angelegt, so erscheinen die durch die Elektroden 8 und 9 gebildeten Zeichen und Symbole ebenso wie die Konturschichten 12 und 13 dunkel.

Sind die Polarisatoren 5 und 6 parallel zueinander ausgerichtet, so ist dieser Effekt genau umgekehrt. In den Bereichen der Konturschichten 12 und 13 kann dann das Licht von einer zur anderen Glasplatte 1 und 2 durchtreten, während es in dem nicht von den Konturschichten 12 und 13 abgedeckten Bereich nicht durchtreten kann und dieser Bereich somit für den Betrachter dunkel erscheint. Bei angelegtem elektrischen Feld an den Elektroden 8 und 9 erscheinen die Zeichen und Symbole hell sichtbar.

Besteht die Konturschicht 12 und 13 aus einem farbigen Werkstoff oder ist mit einer Farbschicht versehen, so erscheint sie farbig leuchtend.

- 1 -

Patentansprüche

1. Flüssigkristallanzeige zur Darstellung von Zeichen und Symbolen, mit permanent sichtbaren Konturen, wie zum Beispiel einer Skala, Zeichen oder Umrandungen, mit einer zwischen zwei im Abstand zueinander angeordneten Glasplatten gebildeten Kammer, die am Randbereich der Glasplatten nach außen hin verschlossen ist, mit auf den Außenflächen der Glasplatten angeordneten Polarisatoren und mit kammerseitig auf den Glasplatten angeordneten Elektroden, sowie auf den Elektroden angeordneten Orientierungsschichten, wobei die Kammer mit einer Flüssigkristallsubstanz gefüllt ist und der Abstand zwischen den Orientierungsschichten so groß ist, daß sich eine Helix in der Flüssigkristallsubstanz zwischen den Orientierungsschichten aufbauen kann, dadurch gekennzeichnet, daß auf einer Glasplatte (1,2) bzw. einer Orientierungsschicht (10, 11) entsprechend den Konturen eine Konturschicht (12,13) mit einer solchen Dicke aufgebracht ist, daß in dem mit Flüssigkristallsubstanz gefüllten Bereich zwischen der Konturschicht (13) und der zweiten Glasplatte (1,2) bzw. Orientierungsschicht (10,11) keine Helix aufbaubar ist.

2. Flüssigkristallanzeige nach Anspruch 1, dadurch gekennzeichnet, daß die Konturschicht (12,13) durch einen Druckvorgang aufgebracht ist.

3. Flüssigkristallanzeige nach Anspruch 1, dadurch gekennzeichnet, daß die Konturschicht (12,13) eine Folie ist.

4. Flüssigkristallanzeige nach Anspruch 1, dadurch gekennzeichnet, daß die Konturschicht (12,13) durch eine auf die Glasplatte (1,2) aufgebrachte Glaslotschicht gebildet ist.

5. Flüssigkristallanzeige nach Anspruch 1, dadurch gekennzeichnet, daß die Konturschicht (12,13) aus einem Klebstoff besteht.

6. Flüssigkristallanzeige nach einem der vorhergehenden Ansprüche, dadurch gekennzeichnet, daß der Verschluß (4) der Kammer (3) im Randbereich der Glasplatten (1,2) und die Konturschicht (12,13) aus dem gleichen Werkstoff bestehen.

7. Flüssigkristallanzeige nach Anspruch 6, dadurch gekennzeichnet, daß der Verschlußwerkstoff und die Konturschicht (12,13) in einem Arbeitsgang auf die Glasplatte (1,2) aufgebracht ist.

8. Flüssigkristallanzeige nach einem der vorhergehenden Ansprüche, dadurch gekennzeichnet, daß die Konturschicht (12,13) aus einem transparenten Werkstoff besteht.

9. Flüssigkristallanzeige nach Anspruch 8, dadurch gekennzeichnet, daß die Konturschicht (12,13) aus einem farbigen Werkstoff besteht.

10. Flüssigkristallanzeige nach Anspruch 8, <u>dadurch</u> <u>gekennzeichnet</u>, daß eine der den Glasplatten (1, 2) zugewandten Stirnseiten der Konturschicht (12, 13) eine Farbschicht trägt.

11. Flüssigkristallanzeige nach Anspruch 10, <u>dadurch</u> <u>gekennzeichnet</u>, daß die Farbschicht aufgedruckt ist.

12. Flüssigkristallanzeige nach Anspruch 10, <u>dadurch</u> <u>gekennzeichnet</u>, daß die Farbschicht eine Farbfolie ist.

13. Flüssigkristallanzeige nach einem der vorhergehenden Ansprüche, <u>dadurch gekennzeichnet</u>,daß die Dicke der Konturschicht (12) dem Abstand der beiden Glasplatten (1,2) zueinander entspricht.

**Europäisches Patentamt**

## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| P | <u>DE - A1 - 2 849 402</u> (SIEMENS)<br><br>*Seite 2, Zeile 5 - Seite 3, Zeile 9; Fig. 2, Seite 5, Zeilen 3-11 * (22-05-1980)<br><br>-- | 1,6,7, 9,13 | G 02 F 1/133<br>G 09 F 9/30 |
| | <u>DE - B1 - 2 823 845</u> (SIEMENS)<br><br>*Spalte 1, Zeilen 4-16, 30-34; Fig. 2, Spalte 2, Zeilen 44-67 *<br><br>---- | 1,4,6, 13 | |

**RECHERCHIERTE SACHGEBIETE (Int. Cl.³)**

G 02 F 1/00

G 09 F 9/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 04-08-1981 | BENISCHKA |

EPA form 1503.1 06.78